# EUROPEAN PATENT APPLICATION

(11) **EP 4 671 103 A2**
(43) Date of publication of application: **31.12.2025**
(21) Application number: 25182228.4
(22) Date of filing: 12.06.2025
(51) Int. Cl.: B62K 11/04, B62M 7/02

(54) **SADDLE-TYPE VEHICLE, ATTACHMENT, AND METHOD FOR MANUFACTURING SADDLE-TYPE VEHICLE**

(30) Priority: 27.06.2024 JP 2024103853
(71) Applicant: KAWASAKI MOTORS, LTD., Akashi-shi, Hyogo 673-8666 (JP)
(72) Inventor: TAKEUCHI, Hiroshi, Akashi-shi, Hyogo, 673-8666 (JP)
(74) Representative: Hoefer & Partner Patentanwälte mbB

(57) **Abstract**

There are provided a saddle-type vehicle, an attachment, and a method for manufacturing the saddle-type vehicle. The saddle-type vehicle includes: a main frame including a plurality of mounting object portions; a motor unit including a motor; and an attachment to which the motor unit is attached. The attachment includes: a plurality of attachment portions each attached to the plurality of mounting object portions; and a rigid portion that couples the plurality of attachment portions.

## Description

### TECHNICAL FIELD

The present disclosure relates to a technique for supporting a motor in a saddle-type vehicle.

### BACKGROUND ART

JP2013-071716A discloses a configuration in which a power unit including a motor is supported on a vehicle body frame via a hanger plate.

JP2019-177841A discloses a configuration in which a human-powered drive component including a drive unit is attached to a bracket that is a part of the frame.

In a saddle-type vehicle, it may be required to mount different types of motors.

### SUMMARY OF INVENTION

The present disclosure provides a saddle-type vehicle, an attachment, and a method for manufacturing the saddle-type vehicle, enabling different types of motors to be mounted.

According to an illustrative aspect of the present disclosure, a saddle-type vehicle includes: a main frame including a plurality of mounting object portions; a motor unit including a motor; and an attachment to which the motor unit is attached. The attachment includes: a plurality of attachment portions each attached to the plurality of mounting object portions; and a rigid portion that couples the plurality of attachment portions.

According to another illustrative aspect of the present disclosure, an attachment includes: a plurality of attachment portions each attached to a main frame of a saddle-type vehicle; a rigid portion that couples the plurality of attachment portions; and a motor attachment portion to which a motor unit including a motor is attached.

According to another illustrative aspect of the present disclosure, a method for manufacturing a saddle-type vehicle, in which a main frame including a mounting object portion supports a motor unit including a motor, includes: preparing a plurality of types of motor units; preparing, by a plurality of types, an attachment configured to attach the plurality of types of motor units to the main frame; and selecting a type of the attachment according to a type of the motor unit to be supported among the plurality of types of motor units, thereby attaching the type of the motor unit to be supported to the main frame.

According to the saddle-type vehicle and the attachment, the different types of motor units can be mounted on the main frame having the common mounting object portion by using the attachments having different shapes or changing the presence or absence of the attachment.

In addition, according to the method for manufacturing a saddle-type vehicle, the different types of the motor units can be mounted on the saddle-type vehicle by changing the type of the attachment to the main frame having the common mounting object portion.

### BRIEF DESCRIPTION OF DRAWINGS

Fig. 1 is a schematic side view illustrating a saddle-type vehicle according to a first embodiment;
Fig. 2 is a side view illustrating a motor unit, an attachment, and a main frame;
Fig. 3 is a side view seen from a side opposite to Fig. 2;
Fig. 4 is a front view illustrating the motor unit, the attachment, and the main frame;
Fig. 5 is a diagram illustrating a state in which the motor unit is being attached to the attachment;
Fig. 6 is a diagram illustrating a state in which the attachment is being attached to the main frame;
Fig. 7 is a diagram illustrating a plurality of types of motor units and attachments;
Fig. 8 is a flowchart illustrating an example of a method for manufacturing a saddle-type vehicle; and
Fig. 9 is a side view illustrating an attachment according to a modification.

### DESCRIPTION OF EMBODIMENTS

### (First Embodiment)

Hereinafter, a saddle-type vehicle, an attachment for supporting a motor, and a method for manufacturing a saddle-type vehicle according to a first embodiment will be described.

In the present embodiment, an example in which the saddle-type vehicle is a motorcycle will be described.

The saddle-type vehicle is a vehicle that is driven by a driver as a user in a state of straddling a seat. The saddle-type vehicle may be a scooter-type vehicle in which the driver places feet on steps in a state of straddling a seat. The saddle-type vehicle may be an all terrain vehicle (ATV).

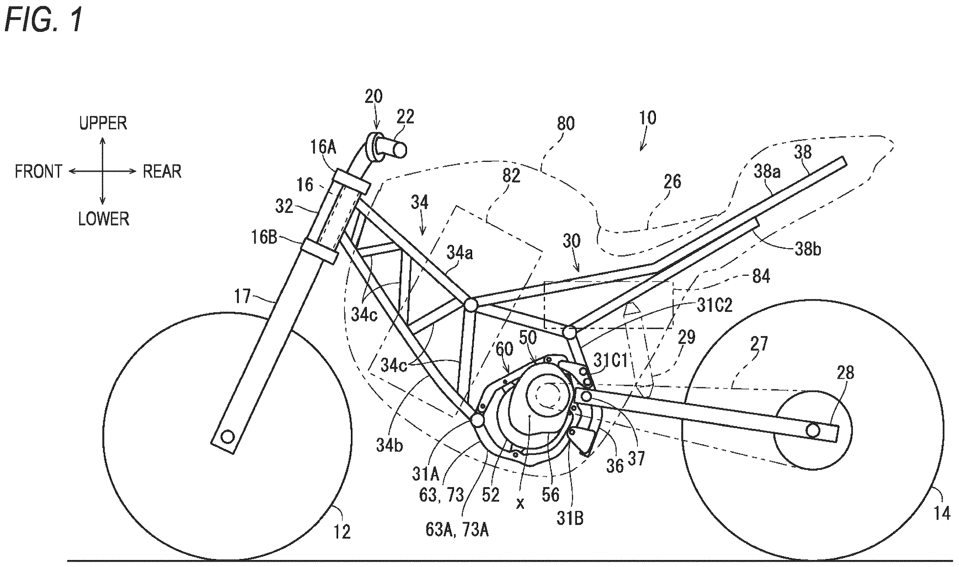

Fig. 1 is a schematic side view illustrating a saddle-type vehicle 10. An overall configuration of the saddle-type vehicle 10 will be described.

The saddle-type vehicle 10 includes a main frame 30, a front wheel 12, a rear wheel 14, and a handle device 20.

In the following description, when referring to upper and lower, front and rear, and left and right, each direction is defined as follows. First, a side of the saddle-type vehicle 10 on which the front wheel 12 and the rear wheel 14 are in contact with a road surface is referred to as the lower, and the opposite side is referred to as the upper. A traveling direction when the saddle-type vehicle 10 travels is referred to as the front, and the opposite side is referred to as the rear. Further, in a state in which the driver is riding on the saddle-type vehicle 10 facing forward, the left and right with respect to the driver are referred to as left and right of the saddle-type vehicle 10. In the present embodiment, a left-right direction may be referred to as a vehicle width direction.

The front wheel 12 is rotatably supported on a front side of the main frame 30 via a front fork 17. The rear wheel 14 is rotatably supported on a rear side of the main frame 30 via a swing arm 28. The handle device 20 is supported on the front side of the main frame 30.

The vehicle 10 can travel on the road surface by causing the front wheel 12 and the rear wheel 14 to rotate in a state in which the front wheel 12 and the rear wheel 14 are in contact with the road surface. When the handle device 20 is rotated, the front wheel 12 rotates around a steering shaft. Accordingly, the vehicle 10 can change the traveling direction.

The saddle-type vehicle 10 includes a motor unit 50. The motor unit 50 is supported by the main frame 30. The motor unit 50 includes an electric motor 52 for driving the vehicle. The motor unit 50 is supported on the main frame 30 via an attachment 60.

A rotational driving force of the motor unit 50 is transmitted to the rear wheel 14 via a transmission mechanism 27. For example, the transmission mechanism 27 may be a chain wound around a gear provided on an output shaft of the motor unit 50 and a gear provided on the rear wheel 14. As another example, an annular belt such as a toothed belt may be used as the transmission mechanism.

The saddle-type vehicle 10 includes a battery 82 for driving the motor unit 50 and a traveling drive circuit 84. The battery 82 is a device that stores energy for driving the electric motor 52. Electric energy to be supplied from the battery 82 is supplied to the electric motor 52 via the traveling drive circuit 84. The traveling drive circuit 84 is, for example, an inverter circuit. The battery 82 and the traveling drive circuit 84 are also supported on the main frame 30.

The saddle-type vehicle 10 further includes a driver seat 26 on which the driver sits. The driver seat 26 is a seat on which the driver sits. The driver can operate the handle device 20 in a state of sitting on the driver seat 26.

The saddle-type vehicle 10 may include a cover 80 that covers the main frame 30 and the motor unit 50 from the left and right. The cover 80 is supported at a constant position by the main frame 30.

A configuration of the main frame 30 will be described more specifically.

The main frame 30 includes a head pipe 32, a pair of left and right front frames 34, a pair of left and right intermediate frames 36, and a pair of left and right rear frames 38.

The head pipe 32 is provided on the front side of the main frame 30. The head pipe 32 is disposed in a posture inclined forward as it extends downward.

A steering shaft 16 is rotatably inserted into the head pipe 32. An upper bracket 16A and an under bracket 16B are supported on the steering shaft 16. A front fork 17 is supported by the upper bracket 16A and the under bracket 16B to extend downward. The front wheel 12 is rotatably supported at a lower end of the front fork 17. The front fork 17 is a front suspension that can absorb impact from the road surface to the vehicle 10 or reduce vibration of the vehicle 10.

The handle device 20 is supported on the upper bracket 16A. The handle device 20 includes a pair of left and right handle bars 22. When the driver steers the pair of handle bars 22, the upper bracket 16A, the under bracket 16B, and the front fork 17 rotate about a central axis of the head pipe 32, and the front wheel 12 also rotates about the central axis of the head pipe 32. Accordingly, the front wheel 12 can be turned by steering the handle device 20.

A brake lever is supported on one or both of the pair of handle bars 22. The brake lever is a lever for braking one or both of the front wheel 12 and the rear wheel 14.

A meter unit that displays information related to the traveling of the saddle-type vehicle 10, such as a speed, may be supported on the handle device 20. The meter unit may be supported directly or indirectly on the main frame 30 near the handle device 20.

The handle device 20 and the meter unit may be provided with interface devices such as switches that receive various instructions to the saddle-type vehicle 10.

The pair of left and right front frames 34 extend rearward while branching into the left and right sides from the head pipe 32.

The front frame 34 includes an upper frame portion 34a and a lower frame portion 34b.

The upper frame portion 34a extends rearward from an upper portion of the head pipe 32. The lower frame portion 34b extends rearward from a lower portion of the head pipe 32. The upper frame portion 34a and the lower frame portion 34b face obliquely downward and rearward from the head pipe 32 in a side view. The upper frame portion 34a extends rearward of the lower frame portion 34b and reaches a rear end portion of the motor unit 50. A portion of the lower frame portion 34b on a head pipe 32 side extends below and in parallel with the upper frame portion 34a toward a front side of the motor unit.

The upper frame portion 34a and the lower frame portion 34b are coupled between the head pipe 32 and the motor unit 50 by a plurality of coupling frames 34c. The plurality of coupling frames 34c couples the upper frame portion 34a and the lower frame portion 34b to form a truss structure.

The battery 82 may be located between the pair of left and right front frames 34, and the battery 82 may be supported on the front frames 34.

On each of the left and right sides, the intermediate frame 36 extends downward from a rear end portion of the upper frame portion 34a.

The intermediate frames 36 pass behind the motor unit 50 from the rear end portion of the upper frame portion 34a, and extend in an up-down direction to a lower end position of the motor unit 50 or extend downward of the lower end position. A pivot shaft 37 is supported on an intermediate portion of the intermediate frame 36. The pivot shaft 37 has a central axis that extends along the vehicle width direction. The swing arm 28 is swingably supported on the pivot shaft 37.

The swing arm 28 extends obliquely downward from the intermediate portion in a longitudinal direction of the intermediate frame 36. The rear wheel 14 is rotatably supported at a rear end portion of the swing arm 28. The rear wheel 14 can be vertically displaced in response to the swing of the swing arm 28. The intermediate frame 36 may be referred to as a pivot bracket. The intermediate frame 36 is an example of an arm support frame that is located rearward of the attachment 60 to be described later and supports the swing arm 28.

The main frame 30 includes a plurality of mounting object portions 31A, 31B, 31C1, and 31C2. In the present embodiment, the mounting object portions 31A, 31B, 31C1, and 31C2 are provided at a rear end portion of the lower frame portion 34b, an upper portion of the intermediate frame 36, and a lower portion of the intermediate frame 36.

For example, the mounting object portion 31A is provided at the rear end portion of the lower frame portion 34b. For example, the mounting object portion 31A is a tubular member having a screw hole through which a screw S can be inserted along the vehicle width direction.

For example, the mounting object portion 31B is provided at the lower portion of the intermediate frame 36. The mounting object portion 31B is, for example, a bracket formed at a lower end of the intermediate frame 36. The bracket is fixed to the lower portion of the intermediate frame 36 by welding or the like, and is provided with a screw insertion hole.

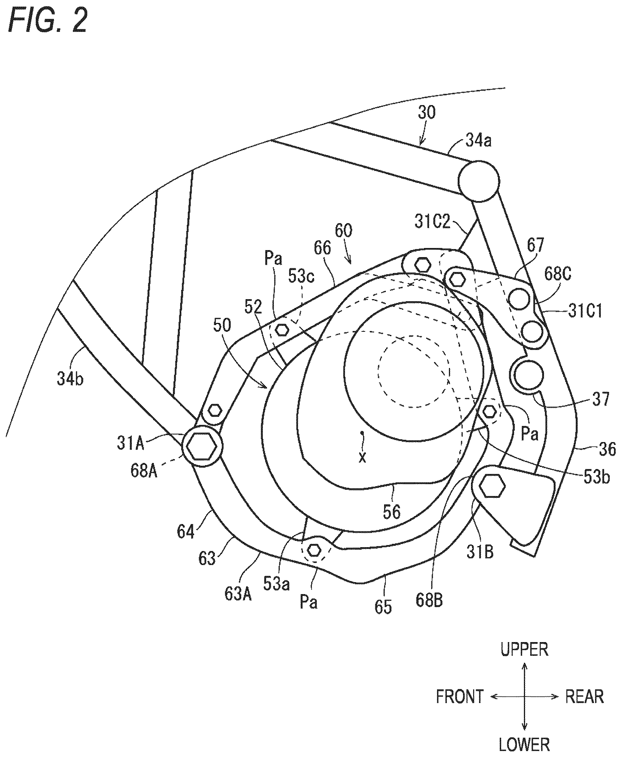

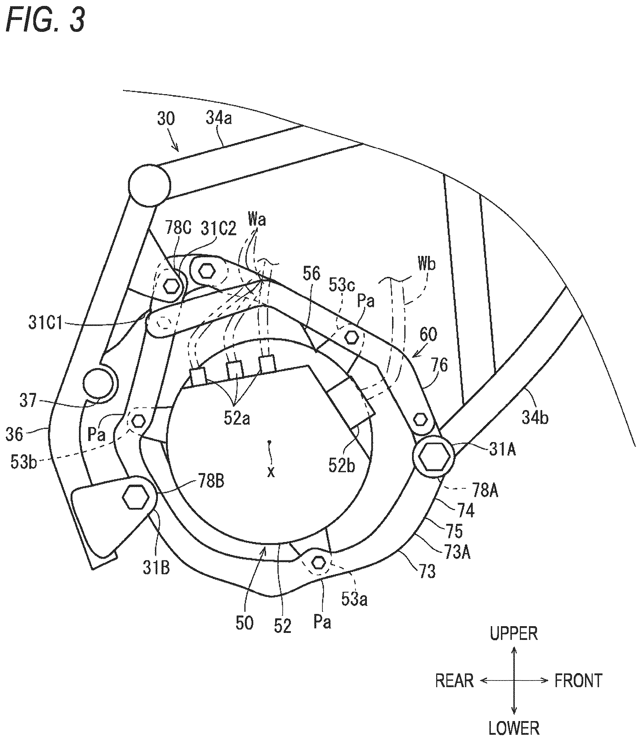

For example, the mounting object portions 31C1 and 31C2 are provided in the upper portion of the intermediate frame 36. For example, as illustrated in Fig. 2, the mounting object portion 31C1 is a screw hole portion formed between an upper end of the intermediate frame 36 and the pivot shaft 37. In addition, for example, as illustrated in Fig. 3, the mounting object portion 31C2 is a bracket attached between the upper end of the intermediate frame 36 and the pivot shaft 37 by welding or the like. The bracket may be provided with a screw hole.

The mounting object portions 31A, 31B, and 31C1 are provided on a left side in the vehicle 10, and the mounting object portions 31A, 31B, and 31C2 are provided on a right side in the vehicle 10. The mounting object portion 31A is an example of a front mounting object portion located forward of a rotation axis X of the electric motor 52. The mounting object portions 31B, 31C1, and 31C2 are an example of a rear mounting object portion located rearward of the rotation axis X.

The number and positions of the plurality of mounting object portions 31A, 31B, 31C1, and 31C2 are not limited to the above example.

The motor unit 50 is attached to the plurality of mounting object portions 31A, 31B, 31C1, and 31C2 via the attachment 60.

The attachment 60 is attached to the mounting object portion 31A of the front frame 34 and is attached to the mounting object portions 31B, 31C1, and 31C2 of the intermediate frame 36, and thus the attachment 60 can function as a rigid body that couples and supports the front frame 34 and the intermediate frame 36. Therefore, for example, a forward driving force generated by contact between the ground and the rear wheel 14 is effectively transmitted from the intermediate frames 36 to the front frames 34 via the attachment 60, and the driving force is effectively received by the entire vehicle 10. At this time, the force is mainly received by the attachment 60, and thus an external force is less likely to be applied to the electric motor 52.

On each of the left and right sides, the rear frame 38 extends obliquely upward and rearward from a rear half potion of the front frame 34. In the present embodiment, the rear frames 38 are implemented by a plurality of frames 38a and 38b. The first rear frame 38a extends in an oblique upward direction from the middle in a longitudinal direction of the upper frame portion 34a. The second rear frame 38b extends in an oblique upward direction from the rear end of the upper frame portion 34a and is connected to the first rear frame 38a.

The traveling drive circuit 84 may be located between the pair of left and right rear frames 38 and supported by the pair of left and right rear frames 38.

The driver seat 26 may be located above the pair of left and right rear frames 38 and supported by the pair of left and right rear frames 38. A tandem seat may be provided behind the driver seat 26.

A rear suspension 29 is interposed between the rear frame 38 and the swing arm 28. The rear suspension 29 can absorb impact from the road surface to the vehicle 10 and reduce vibration of the vehicle 10.

The main frame 30 is a rigid member made of metal or the like. The main frame 30 may be implemented by, for example, a frame in which a metal pipe is bent and welded, a cast frame, or a combination thereof. A portion of the main frame 30 that includes the mounting object portions 31A, 31B, 31C1, and 31C2 and keeps a positional relation of the mounting object portions 31A, 31B, 31C1, and 31C2 constant may be a portion that is implemented as an integral component by bending, casting, welding, or the like and is less likely to be disassemble without being broken.

A specific frame shape of the main frame 30 may be appropriately changed based on a strength, a support location, or a design demand.

A structure for attaching the motor unit 50 to the main frame 30 will be described more specifically.

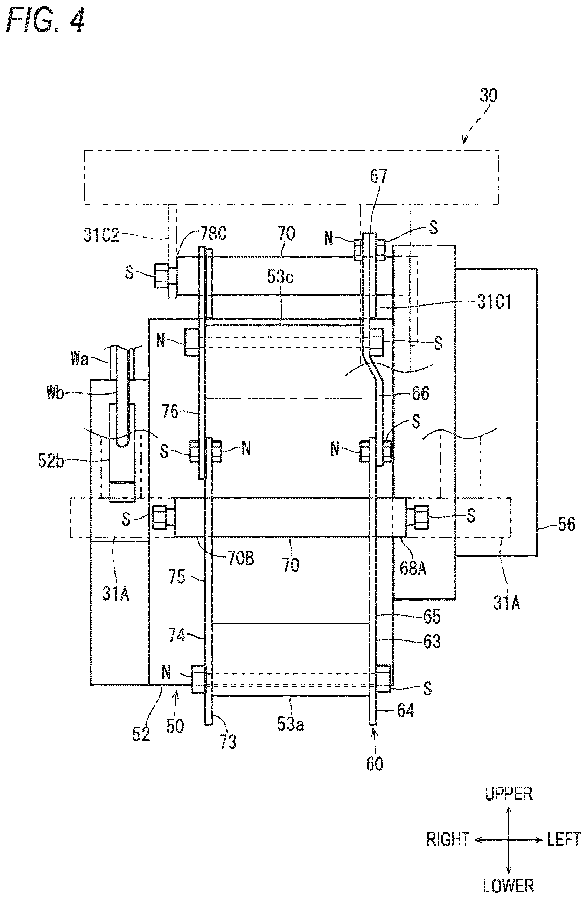

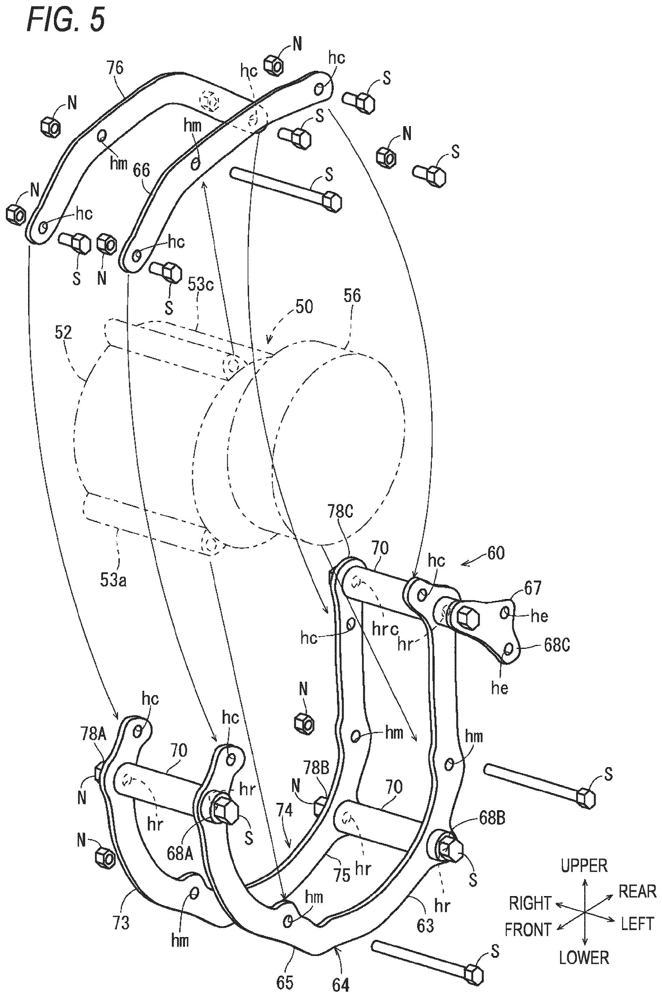

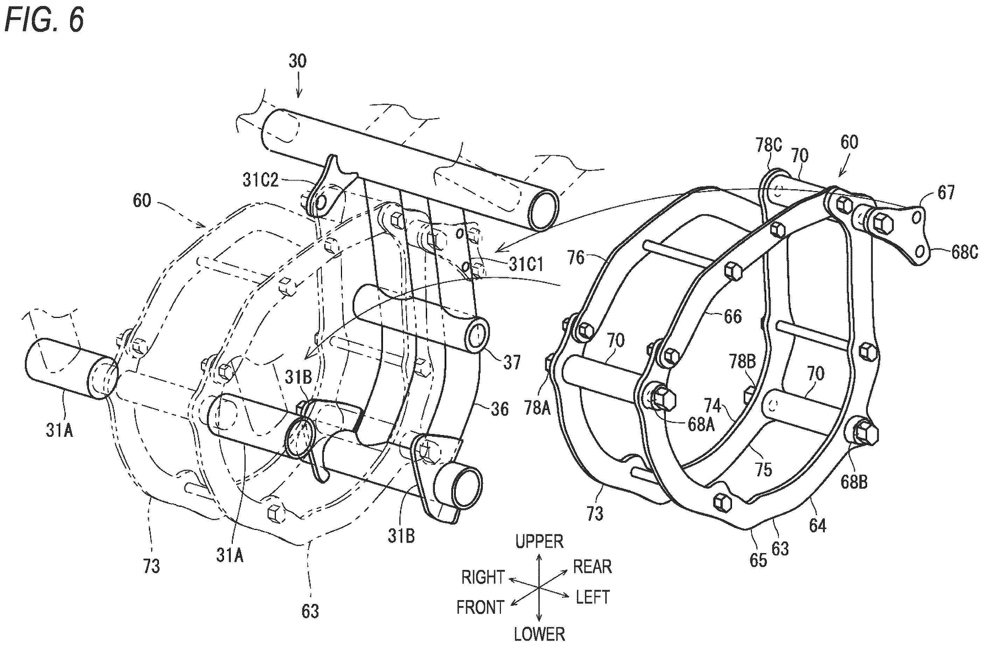

Fig. 2 is a side view illustrating a state in which the motor unit 50 is attached to the main frame 30 via the attachment 60. Fig. 3 is a side view seen from a side opposite to Fig. 2. Fig. 4 is a front view illustrating a state in which the motor unit 50 is attached to the main frame 30 via the attachment 60. In Fig. 4, the main frame 30 is partially indicated by a two-dot chain line. Fig. 5 is a diagram illustrating a state in which the motor unit 50 is being attached to the attachment 60. In Fig. 5, the motor unit 50 is indicated by a two-dot chain line. Fig. 6 is a diagram illustrating a state in which the attachment 60 is being attached to the main frame 30. In Fig. 6, the motor unit 50 attached to the attachment 60 is omitted.

The motor unit 50 includes the electric motor 52. The electric motor 52 includes an armature and a field element therein, and is formed, for example, in a columnar shape. The rotation axis X is supported on the main frame 30 via the attachment 60 in a posture along the vehicle width direction.

An introduction portion 52a into which a power supply line Wa drawn out from the traveling drive circuit 84 is introduced may be provided on one end side in an axial direction of the electric motor 52. An introduction portion 52b into which a signal line Wb is introduced may be provided on one end side in the axial direction of the electric motor 52. The signal line Wb may be connected to, for example, a sensor for detecting a state of the electric motor 52. The introduction portions 52a and 52b may be connectors to which a connector provided at an end portion of the power supply line Wa or the signal line Wb is connected, or may be insertion holes for an electric wire or a cable through which the power supply line Wa or the signal line Wb is directly inserted. If a plurality of power supply lines Wa and a plurality of signal lines Wb are bundled into one and introduced into the electric motor 52, a space occupied by the wiring can be shortened and a connection work to the electric motor 52 is facilitated.

The motor unit 50 may include a rotational driving force transmission mechanism 56. The rotational driving force transmission mechanism is a mechanism that transmits power to the rear wheel 14 on one side in the vehicle width direction. The rotational driving force transmission mechanism 56 may be a transmission mechanism that changes a rotation speed of the electric motor 52 at a constant gear ratio or a variable gear ratio. For example, the rotational driving force transmission mechanism 56 may be a constant transmission mechanism including a gear coupled to an output shaft of the electric motor 52, a gear to which rotation is transmitted to the transmission mechanism 27, and an annular chain wound around the gears.

The rotational driving force transmission mechanism 56 may have a flat shape elongated in one direction so as to be disposed at a position shifted from the plurality of gears. The rotational driving force transmission mechanism 56 may be disposed on one side in the axial direction of the electric motor 52 and may be integrated with the electric motor 52. As a result of the rotational driving force transmission mechanism 56 being formed in a flat shape elongated in one direction, a portion of the rotational driving force transmission mechanism 56 may protrude from an outer shape of the electric motor 52 in a side view. In the present embodiment, the rotational driving force transmission mechanism 56 extends in an oblique upward direction with respect to the electric motor 52.

The rotational driving force transmission mechanism may not change the rotation speed of the electric motor 52. The traveling drive circuit 84, such as an inverter circuit, may be integrated into the motor unit 50. The rotational driving force transmission mechanism may be assembled to the vehicle separately from the motor without being integrated with the motor.

The motor unit 50 includes motor-side mounting object portions 53a, 53b, and 53c. For example, the motor-side mounting object portions 53a, 53b, and 53c may be portions partially protruding from an outer peripheral portion of the electric motor 52. For example, the motor-side mounting object portions 53a, 53b, and 53c protrude from respective positions at which the outer periphery of the electric motor 52 is divided into three equal portions. The motor-side mounting object portions 53a, 53b, and 53c are formed in a protruding shape elongated in the axial direction of the electric motor 52. The motor-side mounting object portions 53a, 53b, and 53c have screw holes formed at both ends. The motor unit 50 may have screw fastening fixing locations prepared for other models.

The motor unit 50 is attached to the main frame 30 via the attachment 60.

The attachment 60 is a component to which the motor unit 50 is attached. The attachment 60 may be formed of a metal plate, a metal pipe, or the like. The attachment 60 includes a plurality of attachment portions 68A, 68B, 68C, 78A, 78B, and 78C and rigid portions 63 and 73. The plurality of attachment portions 68A, 68B, 68C, 78A, 78B, and 78C are portions that are attached to the plurality of mounting object portions 31A, 31B, 31C1, and 31C2, respectively. For example, on the left side, the plurality of attachment portions 68A, 68B, and 68C are attached to the plurality of mounting object portions 31A, 31B, and 31C1, respectively. On the right side, the plurality of attachment portions 78A, 78B, and 78C are attached to the plurality of mounting object portions 31A, 31B, and 31C2, respectively. The rigid portions 63 and 73 are portions that couple the plurality of attachment portions 68A, 68B, 68C, 78A, 78B, and 78C. More specifically, on the left side, the rigid portion 63 couples the plurality of attachment portions 68A, 68B, and 68C, and maintains the same in a constant positional relation. On the right side, the rigid portion 73 couples the plurality of attachment portions 78A, 78B, and 78C, and maintains the same in a constant positional relation.

In the present embodiment, the attachment 60 includes a first attachment divided component 64, a second attachment divided component 74, and a coupling component 70.

The first attachment divided component 64 includes the plurality of attachment portions 68A, 68B, and 68C, and the rigid portion 63 that couples the plurality of attachment portions 68A, 68B, and 68C. The second attachment divided component 74 includes the plurality of attachment portions 78A, 78B, and 78C, and the rigid portion 73 that couples the plurality of attachment portions 78A, 78B, and 78C. In addition, the motor unit 50 is attached to the first attachment divided component 64 and the second attachment divided component 74.

The coupling component 70 is an elongated portion that couples the first attachment divided component 64 and the second attachment divided component 74 in a state of being arranged with spacing between each other in the vehicle width direction.

A more specific example will be described.

The rigid portion 63 of the first attachment divided component 64 is formed in an annular shape to surround the motor unit 50 in a side view. In the present embodiment, the rigid portion 63 is formed in an annular shape to surround the electric motor 52.

The rigid portion 63 has a lower component 65 and an upper component 66. The lower component 65 is formed in a partially annular shape and opens upward in a side view. In the present embodiment, the lower component 65 is formed in a J-shape whose rear end portion is longer upward than a front end portion. The upper component 66 is an elongated member that can be disposed so as to span across both ends of the lower component 65. Here, the upper component 66 is curved so as to be convex upward.

Both end portions of the lower component 65 and both end portions of the upper component 66 are coupled to each other, whereby the lower component 65 and the upper component 66 are combined to form an annular shape. For example, screw insertion holes hc are formed at both the end portions of the lower component 65 and both the end portions of the upper component 66. In a state in which the end portions of the lower component 65 and the end portions of the upper component 66 are overlapped, the lower component 65 and the upper component 66 are combined by using the screws S, nuts N, and the like. The upper component 66 functions as an upper rigid portion located above the motor unit 50.

Two screw insertion holes hm are formed in an intermediate portion in a longitudinal direction of the lower component 65. The two screw insertion holes hm are located apart from each other in the longitudinal direction of the lower component 65. A screw insertion hole hm is formed in an intermediate portion in a longitudinal direction of the upper component 66. The motor-side mounting object portions 53a, 53b, and 53c of the motor unit 50 are disposed inside these screw insertion holes hm. The motor unit 50 is attached to the lower component 65 and the upper component 66 inside the screw insertion holes hm using the screws S. That is, portions of the attachment 60 in which the screw insertion holes hm for attaching the motor-side mounting object portions 53a, 53b, and 53c are formed are motor attachment portions Pa.

A screw insertion hole hr is formed at a position close to a front end portion of the lower component 65, a screw insertion hole hr is formed at the intermediate portion in the longitudinal direction of the lower component 65, and a screw insertion hole hr is formed at a position close to a rear end portion of the lower component 65. The screw insertion hole hr in the intermediate portion in the longitudinal direction of the lower component 65 is located below the screw insertion hole hr close to the rear end portion of the lower component 65.

An extension piece 67 is disposed via a boss portion in a portion of the lower component 65 in which the screw insertion hole hr close to the rear end portion is formed. The extension piece 67 is attached to a position close to the rear end portion of the lower component 65 using the screw S or the like. The extension piece 67 extends rearward. For example, the extension piece 67 is formed in a plate shape expanding vertically as it extends rearward in a side view. Screw insertion holes he are formed at a rear end portion of the extension piece 67. Here, two screw insertion holes he are formed vertically in the extension piece 67.

The second attachment divided component 74 has a configuration similar to that of the first attachment divided component 64, and a difference between the first attachment divided component 64 and the second attachment divided component 74 will be mainly described.

That is, similar to the rigid portion 63, the rigid portion 73 of the second attachment divided component 74 is also formed in an annular shape to surround the motor unit 50 in a side view.

The rigid portion 73 includes a lower component 75 and an upper component 76. The lower component 75 corresponds to the lower component 65, and the upper component 76 corresponds to the upper component 66.

A rear end portion of the lower component 75 is shorter than the rear end portion of the lower component 65, and is shaped such that a portion of the rear end portion of the lower component 65 at which the screw insertion hole hc is formed is omitted. The screw insertion hole hc for coupling with the upper component 76 is formed at a position close to the rear end portion of the lower component 75 and close to the middle in the longitudinal direction of the rear end portion of the lower component 75 than the screw insertion hole hr.

A rear end portion of the upper component 76 is bent more downwardly than the rear end portion of the upper component 66. The rear end portion of the upper component 76 is overlapped with a portion of the lower component 75 at which the screw insertion hole hc is formed. In this state, both end portions of the upper component 76 are attached to both end portions of the lower component 75 using the screws S or the like.

In the second attachment divided component 74, the extension piece 67 is omitted. The rear end portion of the lower component 75 is attached to the main frame 30 using a rear screw insertion hole hrc.

Other configurations of the lower component 75 and the upper component 76 of the second attachment divided component 74 may be the same as those of the lower component 65 and the upper component 66.

In the present embodiment, portions of the lower components 65 and 75 at which the screw insertion holes hr are formed close to the front end portions are the front attachment portions 68A and 78A attached to the mounting object portion 31A serving as the front mounting object portion. Portions of the lower components 65 and 75 at which the screw insertion holes hr are formed in the intermediate portion in the longitudinal direction are the first rear attachment portions 68B and 78B attached to the mounting object portion 31B serving as the rear mounting object portion. A portion of the lower component 65 at which the screw insertion hole he is formed close to the rear end portion is the second rear attachment portion 68C attached to the mounting object portion 31C1 serving as the rear mounting object portion. Further, a portion of the lower component 75 at which the screw insertion hole hrc is formed close to the rear end portion is the second rear attachment portion 78C attached to the mounting object portion 31C2 serving as the rear mounting object portion. The first rear attachment portions 68B and 78B and the second rear attachment portions 68C and 78C are an example of the rear attachment portions located rearward of the rotation axis X, respectively.

Portions of the rigid portions 63 and 73 between the front attachment portions 68A and 78A and the first rear attachment portions 68B and 78B are lower rigid portions 63A and 73A that couple the front attachment portions 68A and 78A and the first rear attachment portions 68B and 78B below the motor unit 50.

At least one of the attachment portions 68A, 68B, 68C, 78A, 78B, or 78C is an outer attachment portion that is located outward of the main frame 30 in the vehicle width direction and is attached to the main frame. In the present embodiment, the attachment portion 68C is an outer attachment portion disposed outward of the mounting object portion 31C1 of the main frame 30 and is attached to the mounting object portion 31A by screw fastening or the like. The other attachment portions 68A, 68B, 78A, 78B, and 78C are inner attachment portions that are located inward of the main frame 30 in the vehicle width direction and are attached to the main frame 30.

By disposing the other attachment portions 68A, 68B, 78A, 78B, and 78C inward of the main frame 30 in the vehicle width direction, an attachment structure of the attachment 60 is likely to be disposed inside of the main frame 30, and the vehicle 10 can be made compact. Here, by using only one attachment portion 68C as the outer attachment portion, the attachment portion 68C can be easily attached to the main frame 30.

For example, if all the attachment portions of the attachment are disposed in the main frame, there is a possibility that the main frame itself becomes an obstacle and it is difficult to dispose the attachment in the main frame. In the present embodiment, the other attachment portions 68A, 68B, 78A, 78B, and 78C of the attachment 60 can be first disposed inside of the main frame 30, and finally the attachment portion 68C can be disposed outside of the mounting object portion 31C1 of the main frame 30. Therefore, it is easy to assemble the attachment 60 to the main frame 30.

The first attachment divided component 64 is located on a side on which the transmission mechanism 27 is located in the vehicle width direction, here, on the left side. At least one of the attachment portion 68B or 68C among the plurality of attachment portions 68A, 68B, and 68C of the first attachment divided component 64 is attached to the intermediate frame 36 that supports the swing arm 28. In particular, the attachment portion 68C extends further rearward of the rear end portion of the lower component 65 and is attached to the mounting object portion 31C1 of the intermediate frame 36.

A gear on a motor unit 50 side around which the transmission mechanism 27 is wound is located forward of the attachment portions 68B and 68C. A gear on a rear wheel 14 side around which the transmission mechanism 27 is wound is located rearward of the attachment portions 68B and 68C. Therefore, a tension caused by a circulation rotation of the transmission mechanism 27 may act as a force pulling a left side portion of the motor unit 50 and a left side portion of the rear wheel 14. When the attachment portions 68B and 68C are attached to the intermediate frame 36, the force is effectively received. In particular, the attachment portion 68C extends rearward from the attachment 60 and is supported on the intermediate frame 36, and thus the force is effectively received.

The coupling component 70 is formed in an elongated shape, here, in a cylindrical shape or a columnar shape. In the present embodiment, the attachment 60 includes three coupling components 70. The coupling component 70 is located between the attachment portion 68A and the attachment portion 78A, between the attachment portion 68B and the attachment portion 78B, between the attachment portion 78C and a portion of the lower component 65 at which the screw insertion hole hr close to the rear end is formed, and is fixed to the lower component 65 and the lower component 75 by screw fastening or the like. Accordingly, the first attachment divided component 64 and the second attachment divided component 74 are coupled to each other by the coupling component 70 in a state of being arranged with spacing between each other in the vehicle width direction. Here, the screws used for screw fastening may be elongated screws that penetrate in the left-right direction, or may be short screws that are separate on the left and right. For example, the elongated screws may be used for at least the front attachment portions 68A and 78A, and the short screws that are separate on the left and right may be used for the other attachment portions. The elongated screw is advantageous in terms of reducing the number of components and increasing a rigidity. For example, if the elongated screws are used for at least the front attachment portions 68A and 78A, a force caused by a handle operation is likely to be received with the elongated screws. Further, the short screw is advantageous in terms of weight reduction.

A portion of the coupling component 70 located between the attachment portion 68A and the attachment portion 78A is an example of a front coupling component located forward of a rotation axis X of a motor unit 90. The force caused by the operation of the handle device 20 is effectively received by the coupling component 70 located forward.

Attachment positions of the motor unit 50 in the first attachment divided component 64 and the second attachment divided component 74 are positions of the screw insertion holes hm, here, positions of the three screw insertion holes hm on each of the left and right sides. The screw insertion holes hm are located between the mounting object portions 31A, 31B, 31C1, and 31C2.

More specifically, in an attached state, the positions of the mounting object portions 31A, 31B, 31C1, and 31C2 correspond to respective positions of the attachment portions 68A, 68B, 68C, 78A, 78B, and 78C. In the first attachment divided component 64, the screw insertion holes hm are located between the attachment portion 68A and the attachment portion 68B, between the attachment portion 68B and the attachment portion 68C, and between the attachment portion 68C and the attachment portion 68A. In addition, in the second attachment divided component 74, the screw insertion holes hm are located between the attachment portion 78A and the attachment portion 78B, between the attachment portion 78B and the attachment portion 78C, and between the attachment portion 78C and the attachment portion 78A.

In each of the first attachment divided component 64 and the second attachment divided component 74, the attachment positions of the motor unit 50 do not need to be in the center of the adjacent mounting object portions 31A, 31B, 31C1, and 31C2. However, the attachment positions of the motor unit 50 may be, for example, within a range of 30%, preferably within a range of 20% of the entire straight line with respect to a midpoint, at each linear distance between the adjacent mounting object portions 31A, 31B, 31C1, and 31C2.

A length in the axial direction of the electric motor 52 in the motor unit 50 may be set larger than a distance between the first attachment divided component 64 and the second attachment divided component 74. In this case, the motor-side mounting object portions 53a, 53b, and 53c may have a length that allows the same to be disposed between the first attachment divided component 64 and the second attachment divided component 74.

The electric motor 52 is disposed between the first attachment divided component 64 and the second attachment divided component, and the motor-side mounting object portions 53a, 53b, and 53c are disposed between the first attachment divided component 64 and the second attachment divided component 74. In this state, the screw S passes through the screw insertion hole hm of the first attachment divided component 64, the screw insertion holes of the motor-side mounting object portions 53a, 53b, and 53c, and the screw insertion hole hm of the second attachment divided component 74, and is screwed with and fastened to the nut N. Accordingly, the motor unit 50 is attached to the attachment 60.

In this state, the introduction portions 52a and 52b of the electric motor 52 may be located outward of the second attachment divided component 74 in the vehicle width direction, for example, on the right outer side.

The rotational driving force transmission mechanism 56 is integrated with the other end side of the electric motor 52. The rotational driving force transmission mechanism 56 may be located outward of the first attachment divided component 64 in the vehicle width direction, for example, on the left outer side.

As described above, the upper components 66 and 76 are attached to the lower components 65 and 75, and thus the upper components 66 and 76 can be attached to the lower components 65 and 75 after the electric motor 52 is disposed in the lower components 65 and 75. Therefore, when the motor unit 50 partially protrudes outside in the vehicle width direction from the first attachment divided component 64 or the second attachment divided component 74, the motor unit 50 can also be easily assembled to the attachment 60.

A procedure example of attaching the motor unit 50 to the main frame 30 using the attachment 60 will be described.

First, as illustrated in Fig. 5, a portion that couples the lower components 65 and 75 via the coupling component 70 is prepared. Then, the electric motor 52 of the motor unit 50 is disposed inside of the lower components 65 and 75 through the upward openings of the lower components 65 and 75. Then, the screw S is inserted through the screw insertion holes hm of the lower components 65 and 75 and the motor-side mounting object portions 53a and 53b of the electric motor 52, and is screwed with and fastened to the nut N. Accordingly, the motor unit 50 is attached to the lower components 65 and 75.

Thereafter, both the end portions of the upper components 66 and 76 are attached to both the end portions of the lower components 65 and 75 by screw fastening or the like. In addition, before and after the attachment, the screw S is inserted through the screw insertion holes hm of the upper components 66 and 76 and the motor-side mounting object portion 53c of the electric motor 52, and is screwed with and fastened to the nut N. Accordingly, the motor unit 50 is also attached to the upper components 66 and 76. The rear end portion of the lower component 65 protrudes upward of the rear end portion of the lower component 75, and thus a work of fastening the rear end portion of the upper component 66 and the rear end portion of the lower component 65 can be easily performed.

At any stage, the extension piece 67 is attached to the lower component 65. Here, it is preferable that the position where the attachment 60 is installed using the extension piece 67 is the lower component 65, where the rotational driving force transmission mechanism 56 is located in the vehicle width direction. Considering a configuration in which a rib (not shown) extending toward the attachment 60 is fixed to the main frame 30, the rotational driving force transmission mechanism 56 that may protrude outward from the electric motor 52 could potentially interfere with the rib. Therefore, adopting the extension piece 67 instead of the rib makes it easier to install the attachment 60.

Thereafter, the attachment 60 is attached to the main frame 30 as illustrated in Fig. 6. At this time, the attachment portions 68A, 68B, 78A, 78B, and 78C are disposed inside of the mounting object portions 31A, 31B, and 31C2, and the attachment work is performed by screw fastening or the like. Thereafter, the attachment portion 68C is disposed outside of the mounting object portion 31C1. Then, the attachment portion 68C is attached to the mounting object portion 31C1 by screw fastening or the like.

Accordingly, the motor unit 50 is attached to the main frame 30 via the attachment 60.

In the state in which the motor unit 50 is attached to the main frame 30, the introduction portions 52a and 52b of the electric motor 52 are located outside of the attachment divided components 64 and 74. Therefore, the wirings Wa and Wb can be easily routed and connected to the introduction portions 52a and 52b. In addition, as shown in Figs. 5 and 6, with respect to the attachment of the upper components 66 and 76 to the lower components 65 and 75, at the front side of the attachment 60, the upper components 66 and 76 are overlapped and fastened to the lower components 65 and 75 from the left to the right in the vehicle width direction. At the rear side of the attachment 60, the upper components 66 and 76 are overlapped and fastened to the lower components 65 and 75 from the right to the left in the vehicle width direction. This configuration enables an overall improvement in the rigidity of the attachment 60.

The rotational driving force transmission mechanism 56 is also located outside of the attachment divided components 64 and 74. Therefore, the assembly operation of the transmission mechanism 27 to the rotational driving force transmission mechanism 56 can be easily performed. The rotational driving force transmission mechanism 56 may be assembled to the electric motor 52 after the electric motor 52 is attached to the main frame 30. Even in this case, the rotational driving force transmission mechanism 56 is located outside of the attachment divided components 64 and 74, and thus the rotational driving force transmission mechanism 56 can be easily assembled outside of the attachment divided components 64 and 74.

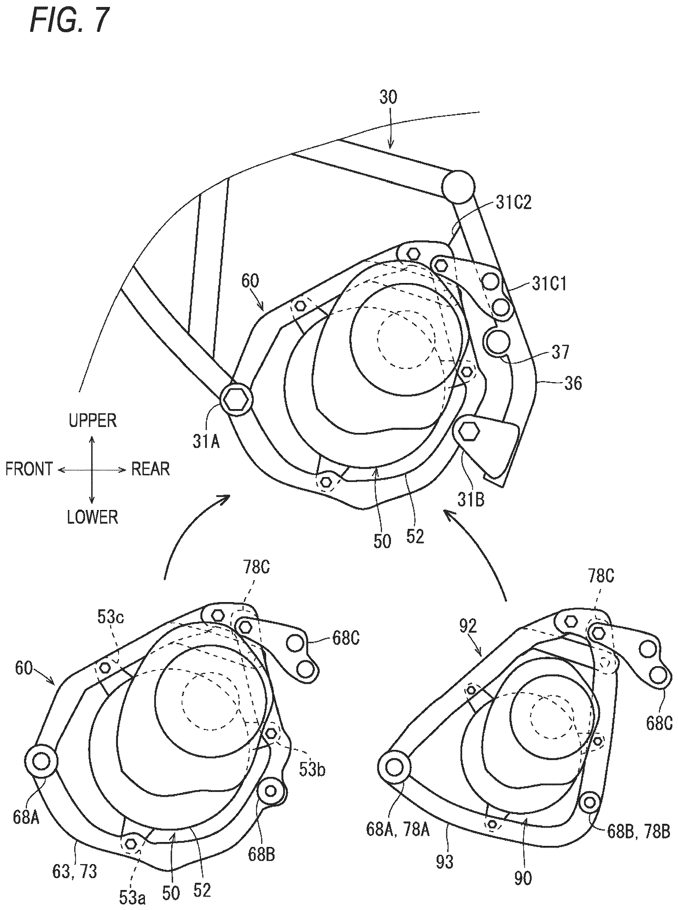

Different types of motor units 50 may be prepared for attachment to the saddle-type vehicle 10. For example, motor units with different outputs may be prepared for the saddle-type vehicle 10 depending on specifications thereof. As illustrated in Fig. 7, the motor unit 90 having a shape different from the motor unit 50 is mounted on the saddle-type vehicle 10.

It may be difficult to change a shape of the main frame 30 according to an outer shape of the motor unit 90. The main frame 30 is designed not only from the viewpoint of strength, which assumes various behaviors during driving, but also from various viewpoints such as production efficiency, design, and cost. Therefore, when a part of the support location of the main frame 30 is changed, the overall balance is lost, and all the viewpoints may not be satisfied.

Therefore, an attachment 92 corresponding to the motor unit 90 having a different shape is prepared. The attachment 92 has the attachment portions 68A, 68B, 68C, 78A, 78B, and 78C at the same positions as the attachment 60. However, a shape of a rigid portion 93 of the attachment 92 is changed according to the shape of the motor unit 90. In addition, a screw insertion hole hm corresponding to the shape of the motor unit 90 is formed in the rigid portion 93 having a changed shape.

The motor unit 90 is attached to the attachment 92, and the attachment 92 is attached to the main frame 30.

A difference in the outer shape of the motor units may be caused by a design change or the like of the motor units.

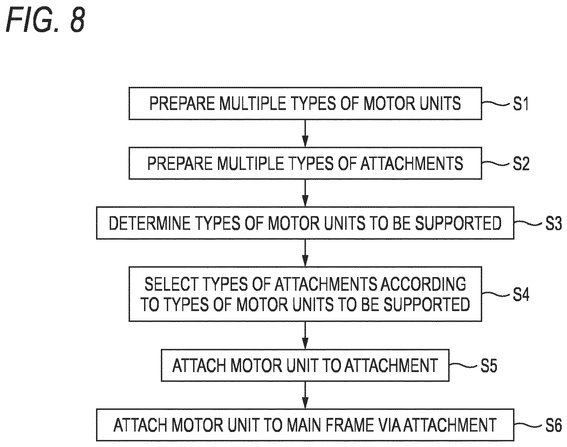

A method for manufacturing the saddle-type vehicle 10 using the attachments 60 and 92 will be described with reference to a flowchart illustrated in Fig. 8.

That is, as illustrated in step S1, the plurality of types of motor units 50 and 90 are prepared for the saddle-type vehicle 10 having the predetermined main frame 30.

In a next step S2, the plurality of types of attachments 60 and 92 are prepared according to the plurality of types of motor units 50 and 90.

In a next step S3, the types of the motor units 50 and 90 to be supported are determined.

In a next step S4, the types of the attachments 60 and 92 are selected according to the types of the motor units 50 and 90 to be supported.

In a next step S5, the motor units 50 and 90 are attached to the selected attachments 60 and 92.

In a next step S6, the motor units 50 and 90 are attached to the main frame 30 via the attachments 60 and 92.

Accordingly, the motor units 50 and 90 having different shapes can be attached to the common main frame 30.

Even in a case in which particular motor units are attached to the main frame without the attachment, another motor unit having different shapes from the particular motor units may be attached to the main frame via the attachment.

According to the saddle-type vehicle 10 and the attachment 60 as described above, the motor unit 50 is attached to the main frame 30 via the attachment 60. Therefore, the different types of motor units 50 and 90 can be mounted on the saddle-type vehicle 10 by changing the shapes of the attachments 60 and 92 or changing the presence or absence of the attachment. Accordingly, when the plurality of types of motor units 50 are used, an overall cost can be reduced. The shape and specification of the motor unit 50 can be easily changed. When the attachment 60 is used, the main frame is reinforced by the rigid portions 63 and 73 of the attachment 60. Therefore, a rigidity of the saddle-type vehicle 10 is likely to be ensured.

A force to be applied to the main frame 30 is less likely to be transmitted to the motor unit 50, and thus the motor unit 50 is less likely to be distorted.

The positions at which the motor units 50 are attached to the attachment 60 and the number of the motor units 50 attached thereto are selected freely. For each of the first attachment divided component 64 and the second attachment divided component 74, the motor unit 50 is preferably fixed to the attachment 60 at three locations.

The rigid portions 63 and 73 also have the lower rigid portions 63A and 73A that couple the first rear attachment portions 68B and 78B and the attachment portions 68A and 78A serving as the front attachment portions. Therefore, the lower rigid portions 63A and 73A are interposed between the mounting object portion 31A serving as the front mounting object portion and the mounting object portion 31B serving as the rear mounting object portion of the main frame 30 below the motor unit 50, and can ensure a rigidity of the main frame 30. Accordingly, the transmission of a force for forward travel from the rear wheel 14 and forward and rearward displacement of the front wheel 12 are effectively received. In addition, the motor unit 50 can be supported from below by the lower rigid portions 63A and 73A.

The rigid portions 63 and 73 have the upper components 66 and 76 serving as upper rigid portions, and the motor unit 50 is attached to the upper components 66 and 76, and thus the motor unit 50 can be supported to be suspended from the upper components 66 and 76.

The rigid portions 63 and 73 are formed in an annular shape to surround the motor unit 50 in a side view, and thus the rigidity of the saddle-type vehicle 10 is likely to be ensured and the motor unit 50 is likely to be supported firmly.

The rigid portion 63 has the lower components 65 and 75 that each have a partially annular shape and open upward, and the upper components 66 and 76 that close the upward openings of the lower components 65 and 75 in a side view. Therefore, the motor unit 50 can be easily attached to the lower components 65 and 75 while the motor unit 50 is disposed in the lower components 65 and 75. Thereafter, the rigid portions 63 and 73 can be formed in an annular shape by attaching the upper components 66 and 76 to the lower components 65 and 75. Therefore, the motor unit 50 can be easily attached to the rigid portions 63 and 73 each having an annular shape.

The attachment 60 includes the first attachment divided component 64, the second attachment divided component 74, and the coupling component 70 that couples the attachment divided components 64 and 74 in a state of being arranged with spacing between each other in the vehicle width direction. Each of the first attachment divided component 64 and the second attachment divided component 74 has the plurality of attachment portions 68A, 68B, 68C, 78A, 78B, and 78C and the rigid portions 63 and 73, and is attached to the motor unit 50. Therefore, the motor unit 50 is firmly held. In addition, the main frame 30 can be made highly rigid by the first attachment divided component 64 and the second attachment divided component 74.

The attachment portion 68C, which is at least one of the plurality of attachment portions 68A, 68B, and 68C of the first attachment divided component 64, is an outer attachment portion that is located outward of the main frame 30 in the vehicle width direction and is attached to the main frame 30. Therefore, the attachment portion 68C serving as the outer attachment portion does not have to be disposed inward of the main frame 30 in the vehicle width direction, and thus the attachment 60 can be easily attached to the main frame 30.

At least one of the attachment portion 68B or 68C of the first attachment divided component 64 is attached to the intermediate frame 36 serving as the arm support frame. Therefore, the force from the transmission mechanism 27 is effectively received by the intermediate frame 36.

The introduction portions 52a and 52b of the wirings Wa and Wb to the motor unit 50 or the rotational driving force transmission mechanism 56 of the motor is located outward of the first attachment divided component 64 or the second attachment divided component 74 in the vehicle width direction. Therefore, as compared with the case in which the introduction portions 52a and 52b are located between the attachment divided components 64 and 74, the wirings Wa and Wb can be easily routed. In addition, if the rotational driving force transmission mechanism 56 is located outward of the attachment divided components 64 and 74 in the vehicle width direction, the motor unit 50 can be easily assembled to the attachment 60. In addition, the assembly of the transmission mechanism 27 is also facilitated.

The attachment positions of the motor unit 50 in the attachment 60 are located between the plurality of mounting object portions 31A, 31B, 31C1, and 31C2. Therefore, the deformation of the main frame 30 is less likely to directly affect the motor unit 50.

According to the method for manufacturing the saddle-type vehicle 10, the different types of motor units 50 and 90 can be easily mounted on the saddle-type vehicle 10 having the common main frame 30 by changing the types of the attachments 60 and 92.

### (Second Embodiment)

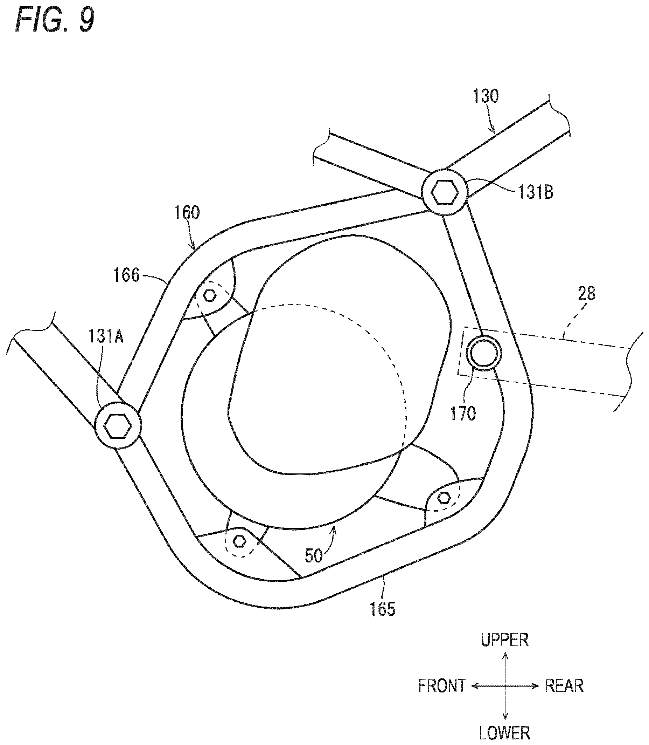

Next, a saddle-type vehicle according to a second embodiment will be described. Fig. 9 is a schematic side view illustrating a state in which the motor unit 50 is attached to a main frame 130 corresponding to the main frame 30 via an attachment 160 in the saddle-type vehicle.

Unlike the main frame 30, the main frame 130 does not include the intermediate frame 36. The main frame 130 includes two mounting object portions 131A and 131B located apart from each other in a front-rear direction.

The attachment 160 includes a lower component 165 that opens upward, and an upper component 166 that closes the upward opening of the lower component 165. The lower component 165 and the upper component 166 may be provided on the left and right sides, respectively.

Both ends of the lower component 165 are fixed to both ends of the upper component 166 by screw fastening or the like, thereby forming the attachment 160 having an annular shape.

A front end of the lower component 165 and a front end of the upper component 166 are attached to the mounting object portion 131A by screw fastening or the like. A rear end of the lower component 165 and a rear end of the upper component 166 are attached to the mounting object portion 131B by screw fastening or the like.

The motor unit 50 is attached to two locations in an intermediate portion in a longitudinal direction of the lower component 165 and to one location in an intermediate portion in the longitudinal direction of the upper component 166 by screw fastening or the like.

Unlike the first embodiment, the attachment 160 includes a pivot support portion 170 that swingably supports the swing arm 28. In the present embodiment, the pivot support portion 170 is provided at a rear portion of the lower component 165. The pivot support portion 170 is, for example, a cylindrical component that extends along a vehicle width direction, and is fixed to the lower component 165 by welding or the like.

According to the present embodiment, when a change in design of the swing arm 28 is considered, it is also possible to cope with the change of the swing arm 28 without changing the main frame. In addition, the attachment 160 that supports the swing arm 28 can be attached to the main frame 130. The attachment 160 and the main frame 130 may be unitized in a location different from the assembly location of the main frame 130, and the unitized attachment 160 and main frame 130 are simply attached to the main frame 130, making manufacturing easy.

The attachment 160 may be provided with a support portion that supports a rear suspension or a link coupled to the rear suspension.

### (Modification)

In the first and second embodiments, the motor unit may include a motor. The motor is a prime motor that converts energy into power, and is not necessarily an electric motor. The motor may be an internal combustion engine.

The saddle-type vehicle may be a vehicle with both an electric motor and an internal combustion engine as the motor.

The configurations described in the embodiments and the modification can be appropriately combined as long as they do not contradict each other.

### (Appendix)

The present specification and the drawings disclose the following aspects.

According to a first aspect of the present disclosure, a saddle-type vehicle includes: a main frame including a plurality of mounting object portions; a motor unit including a motor; and an attachment to which the motor unit is attached. The attachment includes: a plurality of attachment portions each attached to the plurality of mounting object portions; and a rigid portion that couples the plurality of attachment portions.

According to the first aspect, the motor unit is attached to the main frame via the attachment. Therefore, the different types of motor units can be mounted on the saddle-type vehicle by changing a shape of the attachment or changing the presence or absence of the attachment without greatly changing the main frame. That is, the different types of motor units can be mounted on the saddle-type vehicle by making small changes to a smaller attachment rather than a larger main frame. When an attachment is used, the main frame is reinforced by the rigid portion of the attachment. Therefore, a rigidity of the saddle-type vehicle is likely to be ensured.

According to a second aspect of the present disclosure, in the saddle-type vehicle of the first aspect, the plurality of mounting object portions includes: a front mounting object portion located forward of a rotation axis of the motor; and a rear mounting object portion located rearward of the rotation axis. The plurality of attachment portions includes: a front attachment portion attached to the front mounting object portion; and a rear attachment portion attached to the rear mounting object portion. The rigid portion includes a lower rigid portion that couples the front attachment portion and the rear attachment portion below the motor unit.

In this case, the lower rigid portion is interposed between the front mounting object portion and the rear mounting object portion of the main frame below the motor unit, and can ensure the rigidity of the main frame.

According to a third aspect of the present disclosure, in the saddle-type vehicle of the first or second aspect, the rigid portion includes an upper rigid portion located above the motor unit, and the motor unit is attached to the upper rigid portion.

In this case, the motor unit can be supported to be suspended from the upper rigid portion.

According to a fourth aspect of the present disclosure, in the saddle-type vehicle of any one of the first to third aspects, the rigid portion has an annular shape to surround the motor unit in a side view of the saddle-type vehicle.

In this case, the rigid portion has an annular shape to surround the motor unit, and thus the rigidity of the saddle-type vehicle is likely to be ensured, and the motor unit is likely to be supported firmly.

According to a fifth aspect of the present disclosure, in the saddle-type vehicle of the fourth aspect, the rigid portion includes: a lower component formed in a partially annular shape to have an upward opening in the side view; and an upper component formed to close the upward opening of the lower component in the side view.

Accordingly, the motor unit can be attached to the lower component while the motor unit is disposed in the lower component. Thereafter, the rigid portion can be formed in an annular shape by attaching the upper component to the lower component. Therefore, the motor unit can be easily attached to the rigid portion having an annular shape.

According to a sixth aspect of the present disclosure, in the saddle-type vehicle of any one of the first to fifth aspects, the attachment includes: a first attachment divided component; a second attachment divided component; and a coupling component that couples the first attachment divided component and the second attachment divided component in a state of being arranged with spacing between each other in a vehicle width direction. Each of the first attachment divided component and the second attachment divided component includes the plurality of attachment portions and the rigid portion, and is attached to the motor unit.

Accordingly, the motor unit can be firmly held by the first attachment divided component and the second attachment divided component. In addition, the main frame can be made highly rigid by the first attachment divided component and the second attachment divided component.

According to a seventh aspect of the present disclosure, in the saddle-type vehicle of the sixth aspect, the coupling component includes a front coupling component located forward of a rotation axis of the motor.

Accordingly, a force caused by a handle operation is effectively received by the front coupling component.

According to an eighth aspect of the present disclosure, in the saddle-type vehicle of the sixth or seventh aspect, at least one of the plurality of attachment portions of the first attachment divided component is an outer attachment portion that is located outward of the main frame in the vehicle width direction and is attached to the main frame.

In this case, the outer attachment portion does not have to be disposed inward of the main frame in the vehicle width direction, and thus the attachment can be easily attached to the main frame.

According to a ninth aspect of the present disclosure, in the saddle-type vehicle of any one of the sixth to eighth aspects, the main frame includes an arm support frame located rearward of the attachment and configured to support a swing arm. The motor unit includes a transmission mechanism configured to transmit power to a rear wheel on one side in the vehicle width direction. The first attachment divided component is located on a side on which the transmission mechanism is located in the vehicle width direction. At least one of the plurality of attachment portions of the first attachment divided component is attached to the arm support frame.

Accordingly, a force to the transmission mechanism is received by the arm support frame.

According to a tenth aspect of the present disclosure, in the saddle-type vehicle of any one of the sixth to ninth aspects, a wiring introduction portion to the motor unit or a rotational driving force transmission mechanism of the motor is located outward of the first attachment divided component or the second attachment divided component in the vehicle width direction.

In this way, the wiring for the motor unit can be easily routed. If the rotational driving force transmission mechanism of the motor is located outward of the first attachment divided component or the second attachment divided component in the vehicle width direction, the rotational driving force transmission mechanism is easily assembled to the motor unit.

According to an eleventh aspect of the present disclosure, in the saddle-type vehicle of any one of the first to tenth aspects, an attachment position of the motor unit with respect to the attachment is located between the plurality of mounting object portions within the rigid portion.

Accordingly, the deformation of the main frame is less likely to directly affect the motor unit.

According to a twelfth aspect of the present disclosure, in the saddle-type vehicle of any one of the first to eleventh aspects, the attachment includes a pivot support portion configured to swingably support a swing arm.

Accordingly, the attachment to which the swing arm is attached can be attached to the main frame.

According to a thirteenth aspect of the present disclosure, an attachment includes: a plurality of attachment portions each attached to a main frame of a saddle-type vehicle; a rigid portion that couples the plurality of attachment portions; and a motor attachment portion to which a motor unit including a motor is attached.

In this case, the motor unit is attached to the main frame via the attachment. Therefore, the different types of motor units can be mounted on the saddle-type vehicle by changing a shape of the attachment or changing the presence or absence of the attachment. When an attachment is used, the main frame is reinforced by the rigid portion of the attachment. Therefore, a rigidity of the saddle-type vehicle is likely to be ensured.

According to a fourteenth aspect of the present disclosure, a method for manufacturing a saddle-type vehicle, in which a main frame including a mounting object portion supports a motor unit including a motor, includes: preparing a plurality of types of motor units; preparing, by a plurality of types, an attachment configured to attach the plurality of types of motor units to the main frame; and selecting a type of the attachment according to a type of the motor unit to be supported among the plurality of types of motor units, thereby attaching the type of the motor unit to be supported to the main frame.

Accordingly, the different types of motor units can be mounted on the saddle-type vehicle by changing the type of the attachment without greatly changing the main frame.

The above description is illustrative in all aspects, and the present invention is not limited thereto. It is understood that an infinite number of modifications not illustrated can be assumed without departing from the scope of the present invention.

## Claims

1. A saddle-type vehicle (10) comprising:
a main frame (30, 130) including a plurality of mounting object portions (31A, 31B, 31C1, 31C2, 131A, 131B);
a motor unit (50, 90) including a motor (52); and
an attachment (60, 92, 160) to which the motor unit (50, 90) is attached, wherein
the attachment (60, 92, 160) includes:
a plurality of attachment portions (68A, 78A, 68B, 68C, 78B, 78C) each attached to the plurality of mounting object portions (31A, 31B, 31C1, 31C2, 131A, 131B); and
a rigid portion (63, 73, 93) that couples the plurality of attachment portions (68A, 78A, 68B, 68C, 78B, 78C).

2. The saddle-type vehicle (10) according to claim 1, wherein
the plurality of mounting object portions (31A, 31B, 31C1, 31C2, 131A, 131B) includes:
a front mounting object portion located forward of a rotation axis (X) of the motor (52); and
a rear mounting object portion located rearward of the rotation axis (X),
the plurality of attachment portions (68A, 78A, 68B, 68C, 78B, 78C) includes:
a front attachment portion (68A, 78A) attached to the front mounting object portion; and
a rear attachment portion (68B, 68C, 78B, 78C) attached to the rear mounting object portion, and
the rigid portion (63, 73, 93) includes a lower rigid portion that couples the front attachment portion (68A, 78A) and the rear attachment portion (68B, 68C, 78B, 78C) below the motor unit (50, 90).

3. The saddle-type vehicle (10) according to claim 1 or 2, wherein
the rigid portion (63, 73, 93) includes an upper rigid portion (66, 76, 166) located above the motor unit (50, 90), and
the motor unit (50, 90) is attached to the upper rigid portion (66, 76, 166).

4. The saddle-type vehicle (10) according to any one of claims 1 to 3, wherein
the rigid portion (63, 73, 93) has an annular shape to surround the motor unit (50, 90) in a side view of the saddle-type vehicle (10).

5. The saddle-type vehicle (10) according to claim 4, wherein
the rigid portion (63, 73, 93) includes:
a lower component (65, 75, 165) formed in a partially annular shape to have an upward opening in the side view; and
an upper component (66, 76, 166) formed to close the upward opening of the lower component (65, 75, 165) in the side view.

6. The saddle-type vehicle (10) according to any one of claims 1 to 5, wherein
the attachment (60, 92, 160) includes:
a first attachment divided component (64);
a second attachment divided component (74); and
a coupling component (70) that couples the first attachment divided component (64) and the second attachment divided component (74) in a state of being arranged with spacing between each other in a vehicle width direction, and
each of the first attachment divided component (64) and the second attachment divided component (74) includes the plurality of attachment portions (68A, 78A, 68B, 68C, 78B, 78C) and the rigid portion (63, 73, 93), and is attached to the motor unit (50, 90).

7. The saddle-type vehicle (10) according to claim 6, wherein
the coupling component (70) includes a front coupling component located forward of a rotation axis (X) of the motor (52).

8. The saddle-type vehicle (10) according to claim 6 or 7, wherein
at least one of the plurality of attachment portions (68A, 78A, 68B, 68C, 78B, 78C) of the first attachment divided component (64) is an outer attachment portion that is located outward of the main frame (30, 130) in the vehicle width direction and is attached to the main frame (30, 130).

9. The saddle-type vehicle (10) according to any one of claims 6 to 8, wherein
the main frame (30, 130) includes an arm support frame (36) located rearward of the attachment (60, 92, 160) and configured to support a swing arm (28),
the motor unit (50, 90) includes a transmission mechanism (27) configured to transmit power to a rear wheel on one side in the vehicle width direction,
the first attachment divided component (64) is located on a side on which the transmission mechanism (27) is located in the vehicle width direction, and
at least one of the plurality of attachment portions (68A, 78A, 68B, 68C, 78B, 78C) of the first attachment divided component (64) is attached to the arm support frame (36).

10. The saddle-type vehicle (10) according to any one of claims 6 to 9, wherein
a wiring introduction portion (52a, 52b) to the motor unit (50, 90) or a rotational driving force transmission mechanism (56) of the motor (52) is located outward of the first attachment divided component (64) or the second attachment divided component (74) in the vehicle width direction.

11. The saddle-type vehicle (10) according to any one of claims 1 to 10, wherein
an attachment position of the motor unit (50, 90) with respect to the attachment (60, 92, 160) is located between the plurality of mounting object portions (31A, 31B, 31C1, 31C2, 131A, 131B) within the rigid portion (63, 73, 93).

12. The saddle-type vehicle (10) according to any one of claims 1 to 8, wherein
the attachment (160) includes a pivot support portion (170) configured to swingably support a swing arm (28).

13. An attachment comprising:
a plurality of attachment portions (68A, 78A, 68B, 68C, 78B, 78C) each attached to a main frame (30, 130) of a saddle-type vehicle (10);
a rigid portion (63, 73, 93) that couples the plurality of attachment portions (68A, 78A, 68B, 68C, 78B, 78C); and
a motor attachment portion (53a, 53b, 53c) to which a motor unit (50, 90) including a motor (52) is attached.

14. A method for manufacturing a saddle-type vehicle (10) in which a main frame (30, 130) including a mounting object portion (31A, 31B, 31C1, 31C2, 131A, 131B) supports a motor unit (50, 90) including a motor (52), the method comprising:
preparing a plurality of types of motor units (50, 90);
preparing, by a plurality of types, an attachment (60, 92, 160) configured to attach the plurality of types of motor units (50, 90) to the main frame (30, 130); and
selecting a type of the attachment (60, 92, 160) according to a type of the motor unit (50, 90) to be supported among the plurality of types of motor units (50, 90), thereby attaching the type of the motor unit (50, 90) to be supported to the main frame (30, 130).

15. The method for manufacturing the saddle-type vehicle (10) according to claim 14, wherein
the type of the motor unit (50, 90) to be supported is attached to the main frame (30, 130) via the selected type of the attachment (60, 92, 160).
